Europäisches Patentamt

**European Patent Office**

**Office européen des brevets**

(11) Numéro de publication: **0 413 638 B1**

(12) **FASCICULE DE BREVET EUROPEEN**

(45) Date de publication de fascicule du brevet: **07.12.94**　(51) Int. Cl.5: **B01D 53/00**

(21) Numéro de dépôt: **90402300.9**

(22) Date de dépôt: **16.08.90**

(54) **Préparation de billes de tourbe utilisables dans des biofiltres.**

(30) Priorité: **17.08.89 CA 608611**

(43) Date de publication de la demande:
**20.02.91 Bulletin  91/08**

(45) Mention de la délivrance du brevet:
**07.12.94 Bulletin  94/49**

(84) Etats contractants désignés:
**AT BE CH DE DK ES FR GB GR IT LI LU NL SE**

(56) Documents cités:
**EP-A- 0 080 747**
**EP-A- 0 100 024**
**DE-A- 375 306**

**DATABASE WPIL, no. 82-G5645E [22], Derwent Publications Ltd, Londres, GB;& SU-A-4 855 210 (MOSC PEAT IND RES) 15-08-1981**

(73) Titulaire: **ENVIROMAX**
**1, rue de Terre-Neuve**
**ZAC de Courtaboeuf**
**F-91967 LES ULIS CEDEX (FR)**

(72) Inventeur: **Beerli, Marc**
**1736, rue Simard**
**Sherbrooke, Ouébec J1L 3X1 (CA)**

(74) Mandataire: **Tonnellier, Jean-Claude et al**
**Cabinet Nony & Cie.**
**29, rue Cambacérès**
**F-75008 Paris (FR)**

## Description

La présente invention a pour objet un procédé de fabrication de billes de tourbe, les billes qui en résultent, ainsi qu'un biofiltre dans lequel ces billes sont utilisées et les applications de tels filtres.

Différents pays s'intéressent depuis de nombreuses années au traitement, par biofiltres, des gaz odorants et des solvants organiques volatils des industries alimentaires et autres. Le biofiltre est un dispositif d'épuration aérobie des polluants de l'air, grâce aux propriétés de dégradation d'une flore microbienne. La technique consiste à faire diffuser les gaz à traiter à travers un lit ou une colonne de tourbe, cette substance étant tout particulièrement bien adaptée pour servir de support pour les micro-organismes en raison de ses propriétés d'absorption et d'adsorption, de sa grande capacité de rétention d'eau, de sa disponibilité et de son effet tampon. Il se développe alors un film biologique en surface des particules de tourbe qui permet aux bactéries de bénéficier d'un bon taux d'humidité.

On a cherché à utiliser la tourbe sous forme de billes solides dans le but de donner à l'ensemble du biofiltre une structure très aérée de façon à minimiser les pertes de pression (pertes de charge) et à régulariser l'écoulement de l'air sur le filtre.

A cet effet, de très nombreuses recherches ont été effectuées pour fabriquer de telles billes qui pourraient également servir comme agrégats légers dans les bétons ou pour l'amendement des sols.

En vue de ces applications, il a été suggéré d'utiliser de la tourbe de sphaigne finement broyée, à laquelle on a ajouté une solution aqueuse contenant un liant destiné à agglomérer les fines particules de tourbe. Là où les billes sont destinées à l'amendement des sols, on a eu recours au lisier de porc comme agent liant. On a aussi tenté d'utiliser la sciure de bois au lieu de la tourbe de sphaigne comme élément de masse. Dans tous ces cas, les billes sont obtenues en faisant tourner la matière solide (tourbe de sphaigne ou sciure de bois) dans un bouletteur en y ajoutant une solution aqueuse contenant un faible pourcentage d'un agent liant.

Jusqu'à ce jour, on a donc toujours tenu pour acquis qu'il est impossible d'obtenir des billes de tourbe sans avoir recours à une solution aqueuse contenant un agent liant.

Il a maintenant été découvert qu'il est possible d'obtenir des billes constituées au moins en partie de tourbe, qui soient extrêmement dures et pour lesquelles on n'a recours à l'ajout d'aucun liant, seule la tourbe ou un mélange de tourbe et d'un autre matériau organique, telle la sciure de bois, étant utilisé. Il a été également découvert que de telles billes peuvent être fabriquées sans avoir à broyer très finement la tourbe ou la sciure de bois comme on le fait présentement.

L'invention concerne en particulier un procédé de préparation de telles billes, les billes ainsi obtenues, des filtres contenant de telles billes et les applications de tels filtres, ces procédés, billes, filtres et applications, étant tels que définis dans les revendications annexées.

Selon un mode de réalisation de l'invention, chaque bille résulte d'un mélange constitué uniquement, d'une part, d'une tourbe de sphaigne très fibreuse, c'est-à-dire de l'ordre de 1 ou 2 à l'échelle de Von Post modifiée, ou encore de sciure de bois ou d'une substance organique analogue; l'une et l'autre ayant un degré d'humidité inférieur à 70%; le mélange comportant, d'autre part, une tourbe humifiée, c'est-à-dire fortement décomposée et correspondant aux numéros 3 ou 4 de la même échelle de Von Post modifiée. Pour obtenir des billes, il est nécessaire que le mélange soit tel que le rapport de la masse de la tourbe humifiée anhydre à la masse de substance organique (tourbe de sphaigne, sciure de bois ou analogue) soit compris entre 0,7 et 3,9. C'est cette tourbe humifiée qui agit, à l'état naturel, à titre de liant à la masse.

Dans la description détaillée qui suit de quelques réalisations de l'invention, on fera référence aux dessins en annexe.

La Figure 1 est un schéma général illustrant le procédé de fabrication de billes selon les essais décrits;
la Figure 2 est un graphique illustrant les limites de la région de formation des billes dans un système tourbe humifiée brute/tourbe de surface;
la Figure 3 est une courbe illustrant la corrélation entre le diamètre et l'humidité des billes dans un système tourbe humifiée brute/tourbe de sphaigne;
la Figure 4 est un graphique donnant les plages de formation de boulettes dans un système tourbe humifiée/sciure de bois;
la Figure 5 est un diagramme des courbes illustrant la corrélation entre le diamètre et l'humidité du mélange dans un système tourbe humifiée/sciure de bois; le mélange ayant été effectué dans deux granulateurs différents;
la Figure 6 est le schéma d'un biofiltre utilisant des billes obtenues selon l'invention; et
la Figure 7 est le schéma d'un biofiltre utilisant des billes selon l'invention pour l'élimination des odeurs contenues dans l'air.

2

EP 0 413 638 B1

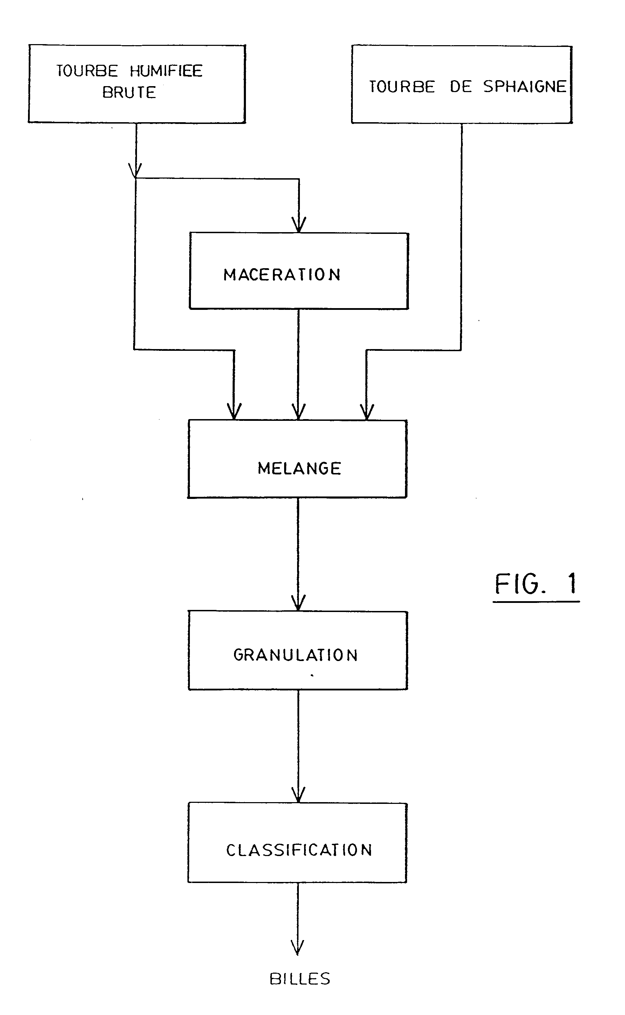

En suivant le schéma de la Figure 1, les caractéristiques préférées de mise en oeuvre de l'invention peuvent être détaillées comme suit :

A - Matières premières

La tourbe de sphaigne est celle que l'on retrouve à la surface d'une tourbière. Comme mentionné précédemment, sa structure fibreuse la situe à l'indice 1 ou 2 de l'échelle de Von Post modifiée. On peut l'obtenir directement de la tourbière ou dans le commerce sous le nom de "Peat Moss". Sa teneur en eau ne dépasse pas 70%, se situant généralement entre 50 et 70%. On peut lui substituer de la sciure de bois en vrac ou comprimée provenant de l'industrie du meuble ou des scieries et dont le taux d'humidité est d'environ 10%, ou des granules extrudés de bois.

La tourbe humifiée est celle que l'on retrouve en profondeur dans une tourbière et que l'on extrait sans récupérer toutefois le fond de celle-ci qui est argileux ou sablonneux. Elle est classée 3 ou 4 à l'échelle Von Post modifiée. Elle est fortement décomposée et pratiquement non fibreuse. Elle contient des substances humiques, des cires et des résines qui agissent comme liant dans le processus d'agglomération. Sa teneur en eau à la sortie de la tourbière se situe entre 85 et 95%.

B - Caractéristiques de mélange

De façon générale et selon l'invention, on effectue le mélange des matières premières en s'assurant qu'il est fait dans des proportions telles que la masse pâteuse qui en résulte ait une humidité entre 70 et 85% et que le rapport $\frac{Ha}{Sa}$ entre la masse Ha de la tourbe humifiée anhydre et la masse Sa de la tourbe de sphaigne anhydre ou de la sciure de bois anhydre soit situé entre 0.3 et 3.9.

S'il s'agit d'un mélange tourbe de sphaigne/tourbe humifiée, l'humidité doit être entre 75 et 85% et le rapport entre 0.7 et 3.9.

S'il s'agit d'un mélange de sciure de bois ou analogue et de la tourbe humifiée, l'humidité doit alors se situer entre 70 et 80% et le rapport entre 0.3 et 0.5.

On notera à nouveau que l'on utilise aucune solution aqueuse contenant un liant conventionnel; la tourbe humiliée constituant, dans son état naturel, la solution liante capable d'agglomérer les éléments de masse: tourbe de sphaigne, sciure de bois ou autres, selon le cas.

C - Macération

Certains essais effectués par l'inventeur ont été effectués en utilisant une tourbe humifiée ayant subi, avant le mélange, une opération de macération qui l'a fortement homogénéisée. La tourbe humifiée devient alors plastique et se comporte comme une suspension non-newtonnienne très uniforme. Durant une telle opération, les matières humiques, les cires et les résines que contient la tourbe humifiée sont distribuées uniformément dans la masse. D'autres essais ont toutefois démontré que cette homogénéisation n'était pas nécessaire pour agglomérer le mélange en billes.

D - Tamisage

Ces essais ont également fait voir qu'il n'était pas non plus utile de tamiser les tourbes pour retirer les pièces de bois sauf celles évidemment trop grosses et qui pourraient entraver le processus de boulettage. Les petites branches ou racines ne dérangent pas l'agglomération du mélange et peuvent même servir d'amorce au boulettage.

E - Mélange dans un malaxeur

Le mélange peut s'effectuer dans tout malaxeur conventionnel. Il peut aussi se faire dans le granulateur ou bouletteur qui lui aussi est de construction conventionnelle.

F - Caractéristiques de billes obtenues

A la sortie du bouletteur, les billes sont essentiellement sphériques, sont très solides et peuvent être entassées sur une hauteur de 50 cm (1-1/2 pied) sans subir de déformation majeure. A ce moment, en effet, les billes sont encore malléables mais non collantes. En les séchant toutefois, pour réduire leur humidité autour de 30%, elles durcissent au point qu'il faut une pression de 31 kg/cm$^2$ pour les déformer.

3

**DESCRIPTION DES ESSAIS**

Divers essais ont été effectués dans le cadre de l'invention.

Dans ces essais, l'agglomération du mélange en billes s'est faite dans un granulateur connu (MMC Disc Pelletizer) de 102 cm (40") de diamètre; 30 cm (12") de largeur; ayant une inclinaison de 30° à 40° et une vitesse de rotation pouvant varier entre 25 et 40 rpm. Pour les besoins des essais, la vitesse a été maintenue à 28 rpm.

On a effectué deux séries d'essais dont une avec de la tourbe humifiée macérée et une avec de la tourbe humifiée brute, c'est-à-dire sans macération. La tourbe de sphaigne a été tamisée sur un tamis dont la grosseur des ouvertures en forme de losange était de 24 mm x 10 mm pour enlever les bouts de bois, racines, brindilles, etc. Comme mentionné précédemment, toutefois, d'autres essais non rapportés ici, ont indiqué que le tamisage n'était pas nécessaire.

Le schéma des opérations pour ces essais apparaît à la Figure 1.

On trouvera plus loin la description d'essais effectués en remplaçant la tourbe de sphaigne par de la sciure de bois.

1 - Essais avec de la tourbe humifiée macérée

Pour ces quatre essais, la tourbe humifiée a été macérée. Elle a été centrifugée par la suite pour enlever une partie de l'eau afin d'obtenir une masse boueuse. La tourbe de sphaigne, ou tourbe de surface, a été tamisée pour enlever les brindilles, racines et bouts de bois, puis mélangée à la tourbe humifiée macérée. Ce mélange s'est fait directement dans le granulateur. Ce dernier a été mis en opération jusqu'à ce que le mélange granule en billes. Par la suite, celles-ci ont été séchées.

Le tableau 1 qui suit donne les paramètres et les résultats de ces essais. Dans ce tableau:

H     est la masse de tourbe humifiée;

Ha    est la masse de tourbe humifiée anhydre;

S     est la masse de tourbe de sphaigne;

Sa    est la masse de tourbe de sphaigne anhydre.

## TABLEAU 1 : ESSAIS AVEC DE LA TOURBE HUMIFIÉE BROYÉE

| ESSAI: | | # 1 | # 2 | # 3 | # 4 |
|---|---|---|---|---|---|
| TOURBE HUMIFIÉE | H (g) | 12 500 | 12 500 | 12 500 | 12 500 |
| | % $H_2O$ | 90,09 | 90,09 | 90,09 | 90,09 |
| | Ha (g) | 1 238,75 | 1 238,75 | 1 238,75 | 1 238,75 |
| | Eau (g) | 11 261,25 | 11 262,25 | 11 261,25 | 11 261,25 |
| TOURBE DE SPHAIGNE | S (g) | 5 000 | 5 000 | 5 000 | 5 000 |
| | % $H_2O$ | 47,47 | 47,47 | 47,47 | 47,47 |
| | Sa (g) | 2 626,5 | 2 889,15 | 2 626,5 | 2 626,5 |
| | Eau (g) | 2 373,5 | 2 610,85 | 2 373,5 | 2 373,5 |
| | Eau (g) | 1 000 | | | |
| MÉLANGE | Total (g) | 18 500 | 18 000 | 17 500 | 17 500 |
| | % Ha | 6,7 | 6,9 | 7,1 | 7,1 |
| | % Sa | 14,2 | 16,0 | 15,0 | 15,0 |
| | % $H_2O$ | 79,1 | 77,1 | 77,9 | 77,9 |
| MÉLANGE | % eau mesurée | 73,95 | 77,79 | 78,03 | 80,75 |
| RAPPORT | H/S | 2,5 | 2,3 | 2,5 | 2,5 |
| | Ha/Sa | 0,47 | 0,43 | 0,47 | 0,47 |

**TABLEAU 1 : ESSAIS AVEC DE LA TOURBE HUMIFIÉE BROYÉE**
(suite)

| ESSAI: | | # 1 | # 2 | # 3 | # 4 |
|---|---|---|---|---|---|
| GRANU-LATEUR | Temps. résid. (min.) | 180 | 180 | 180 | - - - - |
| BILLES | Diam. (mm.) | 19,5 | 5,6 | 4,7 | 5,3 |

Le tableau 1 donne les quantités de tourbe utilisées, les taux d'humidité ainsi que les rapports tourbe humifiée/tourbe de sphaigne sur des bases humides et anhydres.

Tel qu'indiqué précédemment, ces essais sont considérés comme préliminaires, une étude antérieure ayant démontré qu'il était possible de granuler la tourbe avec de la tourbe humifiée macérée. Un essai subséquent (essai no 5) a été réalisé qui a permis toutefois de constater qu'il était possible de granuler avec de la tourbe humifiée brute, c'est-à-dire sans macération. Les résultats des essais 1 à 4 sont donc donnés surtout à titre d'intérêt.

2 - Essais avec tourbe humifiée brute

Pour ces essais, la tourbe humifiée n'a subi aucun traitement préalable au boulettage dans le granulateur.

La procédure suivie est la suivante. La masse de tourbe humifiée brute (21,5 kg) est chargée dans le granulateur qui tourne pendant 30 minutes. On l'arrête ensuite puis on brise les mottes et l'on y introduit la masse de tourbe de sphaigne en vrac pour ensuite mettre le granulateur en marche à nouveau et durant 30 autres minutes. Puis on l'arrête pour briser les mottes, on le remet en marche et on le laisse tourner jusqu'à ce que toutes les petites billes s'agglomèrent aux plus grosses ou s'équilibrent naturellement quant à la grosseur.

La granulateur est enfin vidé et les billes séchées.

Le tableau 2 ci-après semblable au tableau 1, donne les quantités de tourbe utilisées, les taux d'humidité ainsi que les rapports tourbe humifiée brute/tourbe de sphaigne sur des bases humides et anhydres.

### TABLEAU 2 : ESSAIS AVEC DE LA TOURBE HUMIFIÉE BRUTE

| ESSAI : | | # 5 | # 6 | # 7 | # 8 |
|---|---|---|---|---|---|
| TOURBE HUMIFIÉE | H (g) | 12 500 | 21 500 | 21 500 | 21 500 |
| | % $H_2O$ | 88,93 | 88,90 | 90,26 | 86,19 |
| | Ha (g) | 1 383,75 | 2 386,5 | 2 094,1 | 2 969,15 |
| | Eau (g) | 11 116,25 | 19 113,5 | 19 405,9 | 18 530,85 |
| TOURBE DE SPHAIGNE | S (g) | 2 500 | 3 000 | 2 000 | 1 000 |
| | % $H_2O$ | 52,89 | 16,78 | 16,78 | 23,47 |
| | Sa (g) | 1 177,75 | 2 496,6 | 1 664,4 | 765,3 |
| | Eau (g) | 1 322,25 | 503,4 | 335,6 | 234,7 |
| MÉLANGE | Total (g) | 15 000 | 24 500 | 23 500 | 22 500 |
| | % Ha | 9,2 | 9,7 | 8,9 | 13,2 |
| | % Sa | 7,9 | 10,2 | 7,1 | 3,4 |
| | % $H_2O$ | 82,9 | 80,1 | 84,0 | 83,4 |
| MÉLANGE | % eau mesurée | 82,01 | 82,00 | 83,54 | 83,73 |
| RAPPORT | H/S | 5 | 7,2 | 10,8 | 21,5 |
| | Ha/Sa | 1,2 | 0,95 | 1,3 | 3,9 |

7

TABLEAU 2 : ESSAIS AVEC DE LA TOURBE HUMIFIÉE BRUTE
(suite)

| ESSAI: | | # 5 | # 6 | # 7 | # 8 |
|---|---|---|---|---|---|
| GRANU-LATEUR | Temps. résid. (min.) | 75 | 180 | 155 | 135 |
| BILLES | Diam. (mm.) | 10,7 | 6,4 | 19,0 | 24,0 |

EP 0 413 638 B1

TABLEAU 2 :  ESSAIS AVEC DE LA TOURBE HUMIFIÉE BRUTE
(suite)

| ESSAI: | | # 9 | # 10 | # 11 | # 12 |
|---|---|---|---|---|---|
| TOURBE HUMIFIÉE | H (g) | 21 500 | 21 500 | 21 500 | 21 500 |
| | % $H_2O$ | 89,64 | 90,49 | 88,72 | 90,44 |
| | Ha (g) | 2 227,4 | 2 044,65 | 2 425,2 | 2 055,4 |
| | Eau (g) | 19 272,6 | 19 455,35 | 19 074,8 | 19 444,6 |
| TOURBE DE SPHAIGNE | S (g) | 1 500 | 2 500 | 3 500 | 4 500 |
| | % $H_2O$ | 23,47 | 23,47 | 35,48 | 34,48 |
| | Sa (g) | 1 147,95 | 1 913,25 | 2 258,2 | 2 948,4 |
| | Eau (g) | 352,05 | 586,75 | 1 241,8 | 1 351,6 |
| MÉLANGE | Total (g) | 23 000 | 24 000 | 25 000 | 26 000 |
| | % Ha | 9,7 | 8,5 | 9,7 | 7,9 |
| | % Sa | 5,0 | 8,0 | 9,0 | 11,3 |
| | % $H_2O$ | 85,3 | 83,5 | 81,3 | 80,8 |
| MÉLANGE | % eau mesurée | 85,24 | 82,70 | 79,81 | 75,98 |
| RAPPORT | H/S | 14,3 | 8,6 | 6,1 | 4,8 |
| | Ha/Sa | 1,9 | 1,1 | 1,1 | 0,7 |

9

### TABLEAU 2 : ESSAIS AVEC DE LA TOURBE HUMIFIÉE BRUTE
#### (suite)

| ESSAI: | | # 9 | # 10 | # 11 | # 12 |
|---|---|---|---|---|---|
| GRANU-<br>LATEUR | Temps.<br>résid.<br>(min.) | 115 | 227 | 372 | 373 |
| BILLES | Diam.<br>(mm.) | 28,6 | 6,4 | 3 | 0 |

On notera, de cette série d'essais, que la masse de tourbe de sphaigne varie d'un essai à l'autre alors que la masse de tourbe humifiée brute demeure constante, comme il apparaît au tableau 2 dont le format est semblable à celui du tableau 1. La proportion du mélange, tourbe humifiée brute/tourbe de surface, varie donc d'un essai à l'autre.

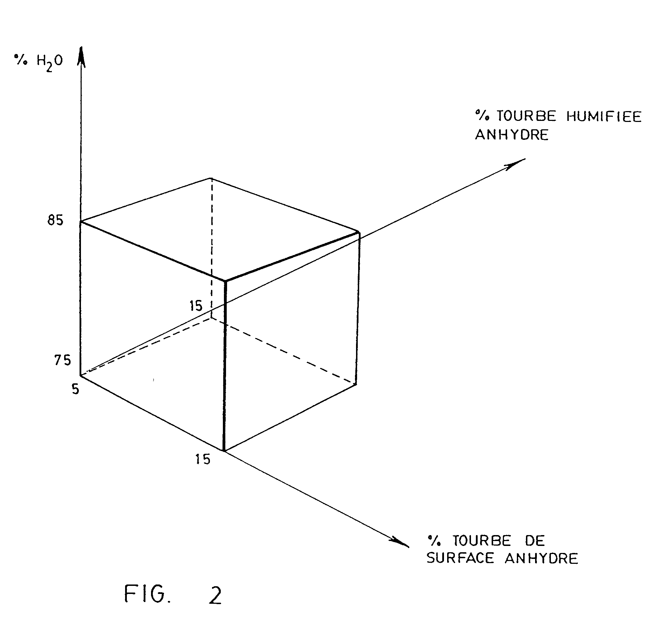

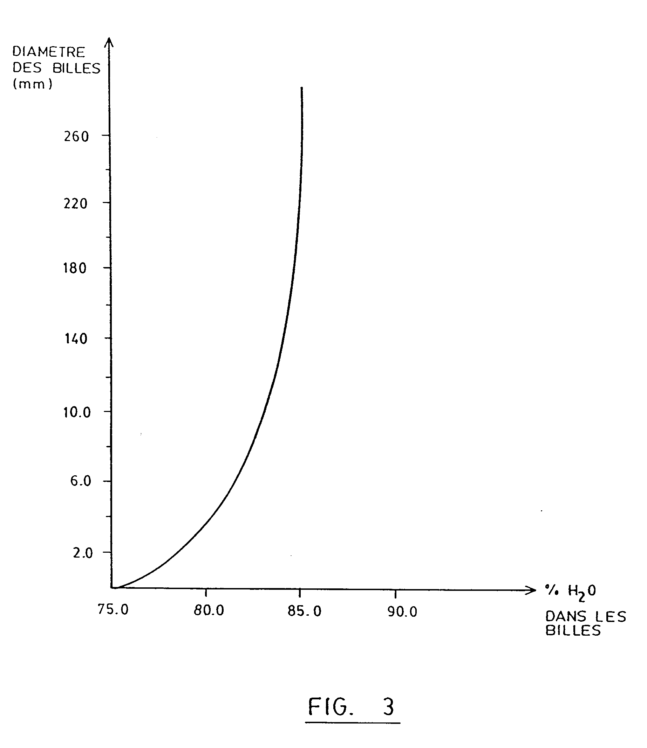

Pour diverses proportions de mélange, on note une distribution des dimensions des billes à l'intérieur d'une fourchette. Les résultats présentés ont permis de définir deux séries de paramètres permettant de cerner l'influence des quantités anhydres de tourbe ainsi que les pourcentages d'eau. Il y a d'abord la définition d'une région à l'intérieur de laquelle il est possible de granuler. Cette région est illustrée en hachures sur la Figure 2. Les données présentées dans le tableau 2 permettent également détablir une corrélation entre l'humidité du mélange et le diamètre des billes. La courbe de cette corrélation apparaît sur la Figure 3.

Les différentes proportions exprimées dans le tableau 2 peuvent être utilisées également pour définir des rapports tourbe humifiée/tourbe de surface. On note, à l'examen de ce tableau, que la granulation est possible dans des plages Ha/Sa de 0.7 à 3.9 et pour des teneurs en humidité du mélange de 75% à 85%.

Comme il a été mentionné précédemment, l'essai no 5 qui a suivi les essais 1 à 4 a été effectué principalement pour démontrer qu'il était possible d'obtenir des billes avec de la tourbe humifiée brute et de la tourbe sphaigne non tamisée. Dans ce cas particulier, on a utilisé 12,5 kg de tourbe humifiée brute que l'on a chargée dans le granulateur que l'on a laissé tourner pendant 10 minutes. On y a ensuite ajouté 2,5 kg de tourbe de sphaigne non tamisée et laissé le granulateur tourner jusqu'à formation de billes de dimensions égales. Par la suite, les billes ont été séchées.

Les observations à noter ici sont les mêmes que celle dérivées ci-dessus des essais nos. 6 à 12.

Séchage des billes

Un échantillon d'une cinquantaine de billes provenant de l'essai no 8 a été séché à l'air ambiant pendant plusieurs jours. Le tableau qui suit présente les résultats obtenus.

TABLEAU 3

| Temps de séchage (min) | % humidité | Diamètre moyen des billes (mm) | % réduction du volume |
|---|---|---|---|
| 0 | 83,73 | 24,0 | 0 |
| 1065 | 80,60 | 19,8 | 17,5 |
| 2505 | 50,65 | 16,8 | 30 |
| 3945 | 30 | 13,7 | 42,9 |

Ce tableau démontre qu'après 3 jours de séchage à l'air ambiant, le diamètre des billes est réduit de 30% et que l'humidité des billes tombe aux environs de 50%. Cet essai devient important dans le sens qu'il démontre qu'il faut au moins 3 jours pour avoir une humidité sous les 30%.

Conclusion résultant des essais 1 à 12

Les essais rapportés ci-dessus permettent de conclure comme suit:

un mélange tourbe humifiée brute/tourbe de sphaigne peut être granulé en billes en autant que l'humidité du mélange se situe entre 75 et 85% et que le rapport Ha/Sa soit à l'intérieur de la fourchette 0.7 - 3.9.

le diamètre des billes produites dépend de l'humidité et du rapport Ha/Sa du mélange.

les temps de rétention varient de 75 minutes à 373 minutes et dépendent également de l'humidité et du rapport Ha/Sa du mélange.

dépendant de l'humidité des billes, près de 3 jours de séchage à l'air ambiant sont nécessaires pour abaisser l'humidité aux environs de 30%.

3 - Essais avec de la tourbe humifiée brute et de la sciure de bois.

Une série d'essais, dans lesquels les proportions relatives de tourbe humifiée brute et de sciure de bois varient d'un essai à l'autre, a été réalisée afin de cerner les plages d'opération des deux paramètres - degré d'humidité du mélange et rapport Ha/Sa. Le tableau 4 ci-dessous établit les données de ces essais.

**TABLEAU 4: ESSAIS AVEC DE LA TOURBE HUMIFIEE BROYEE**

| ESSAI: | | # 13 | # 14 | # 15 | # 15 | # 17 |
|---|---|---|---|---|---|---|
| TOURBE HUMIFIEE | H (kg) | 4.5 | 22.5 | 22.5 | 22.5 | 22.5 |
| | % $H_2O$ | 91.5 | 91.5 | 90.3 | 91.2 | 90.2 |
| | Ha (kg) | 4.0 | 2.0 | 2.2 | 2.0 | 2.3 |
| | Eau (kg) | 41 | 20.5 | 21.3 | 20.5 | 20.2 |
| SCIURE DE BOIS | S (kg) | 9 | 5.2 | 5.9 | 6.4 | 6.8 |
| | % $H_2O$ | 10 | 10 | 8.2 | 7.2 | 7.6 |
| | Sa (kg) | 8.1 | 4.7 | 5.4 | 5.9 | 6.3 |
| | Eau (kg) | 0.9 | 0.52 | 0.48 | 0.46 | 0.5 |
| MÉLANGE | Total (kg) | 54 | 27.7 | 28.4 | 28.9 | 29.3 |
| | % Ha | 7 | 7 | 7.6 | 6.8 | 7.5 |
| | % Sa | 15 | 16.8 | 19 | 20.3 | 21.3 |
| | % $H_2O$ | 78 | 76.2 | 73.4 | 72.9 | 71.2 |
| RAPPORT | H/S | 5 | 4.34 | 3.84 | 3.57 | 3.33 |
| | Ha/Sa | 0.47 | 0.41 | 0.40 | 0.33 | 0.35 |
| DIAMETRE DES BILLES (mm) | granulateur Sherbrooke | 19 | 9-12 | 12 | 9 | 12 |
| | granulateur S.N.A. | 25 | 12 | 19 | 16 | 12 |

CONDITIONS D'OPÉRATION:
- Temps de résidence: 10 minutes
- vitesse de rotation: granulateur Sherbrooke 25 rpm
  granulateur S.N.A. 28 rpm
- angle d'inclinaison: 15° dans les deux cas

Le tableau 4 ci-dessus présente les résultats des essais réalisés dans deux granulateurs différents (Sherbrooke et SNA) et qui ont permis la fabrication de billes dont la masse est principalement la sciure de bois. Celle utilisée pour ces essais provenait de diverses activités de sciage dont le planage par abrasifs donnant une farine de bois à faible teneur d'eau. Ceci explique au départ l'absence de boulettes de très faible diamètre. On remarque également que la plage d'humidité est inférieure (71 à 78%) à celle (80 à 85%) avec les essais impliquant la tourbe de sphaigne. Cette différence s'explique par la plus faible capacité d'absorption d'eau par la sciure de bois.

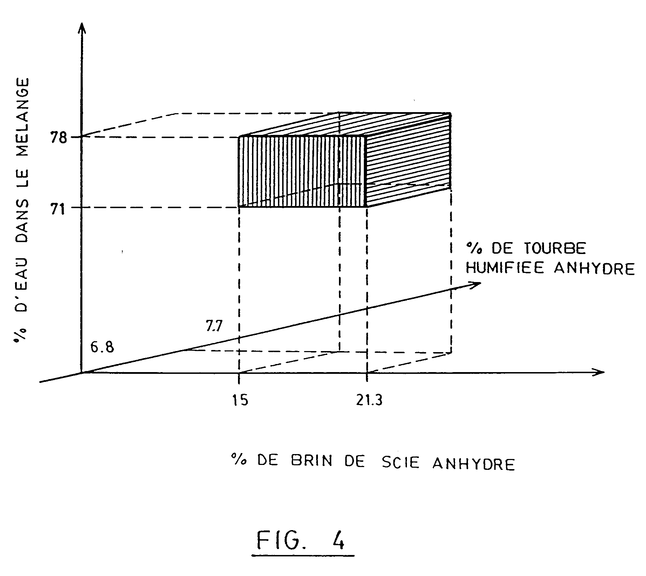

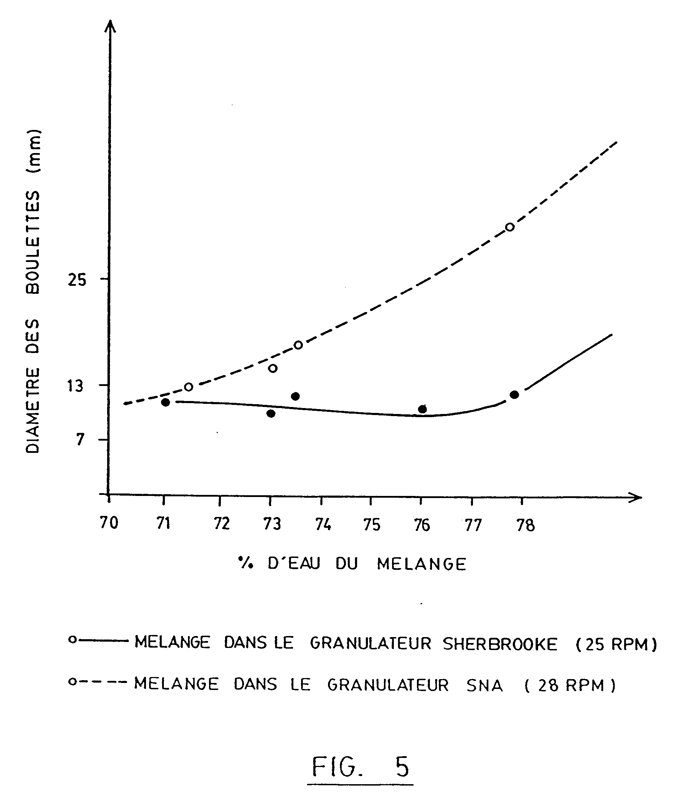

Le graphique de la Figure 4 présente la région propice à l'agglomération, tandis que la Figure 5 donne la corrélation entre le diamètre des billes et la teneur en eau du mélange. On observe encore une différence entre les deux granulateurs. Les calculs effectués au moyen des différentes proportions utilisées indiquent une plage tourbe humifiée/sciure de bois sur une base anhydre variant de 0.33 à 0.47; tandis que l'humidité du mélange se situe entre 71% et 78%.

On tire de ces essais (tourbe humifiée brute-sciure de bois) que l'on peut fabriquer des billes en autant que l'humidité du mélange se situe entre 71 et 80% et que le rapport Ha/Sa soit dans la fourchette 0.3-0.5.

APPLICATION DES BILLES AUX BIOFILTRES

Les billes ci-dessus préparées sont essentiellement destinées à être utilisées dans des biofiltres, pour biodégrader des solvants organiques volatils dans l'air, ou encore des molécules organiques en suspension, responsables d'"odeurs". Pour être ainsi utilisées, les billes doivent être dopées dans le granulateur ou dans un mélangeur approprié lorsqu'elles ont atteint le degré d'humidité désiré.

La tourbe étant acide (pH de 3 à 6,8), elle peut ralentir le processus de développement microbien. On neutralise donc le milieu avec une base, qui peut être de la chaux, afin de ramener le pH autour de la neutralité, c'est-à-dire de 6 à 8.

La tourbe comporte très peu d'azote (N) et devrait en contenir une quantité égale ou supérieure à 0.1% en poids du mélange anhydre. On y ajoutera de l'urée ou un autre sel nutritif azoté. Il est également possible d'incorporer du phosphore (P) utile à la croissance bactérienne et, si nécessaire du potassium (K). On retrouve ainsi les trois éléments de base N/P/K dans les billes.

Cette neutralisation et ce dopage peut s'effectuer de façon très simple, en ajoutant les additifs voulus dans le bouletteur avec le mélange de tourbe.

Une fois ces éléments inclus, on procède à l'incubation par addition d'une solution bactérienne dont la nature dépend de la fonction à laquelle le filtre est destiné.

Finalement, les billes de tourbe dopées et incubées sont séchées par courant d'air ambiant jusqu'à environ 30% d'humidité, comme doit précédemment. Si l'incubation se fait après le séchage il est possible d'utiliser de l'air chaud pour accélérer le processus de séchage des billes de tourbe. Une fois séchées, les billes gardent leurs formes et leur rigidité même si mouillées à nouveau.

Appareillages

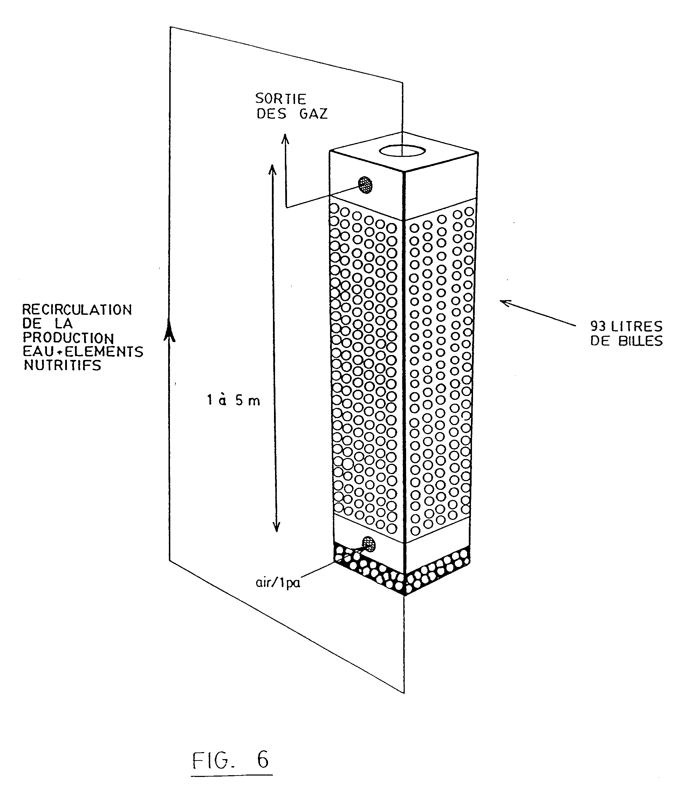

La Figure 6 est un schéma d'un exemple de biofiltre utilisable pour l'élimination de solvants organiques volatils, lequel utilise une colonne apte à recevoir les billes obtenues suite aux essais décrits ci-dessus.

La colonne peut avoir jusqu'à 5 m de hauteur. Dans le cas de l'exemple réalisé, cette colonne avait une hauteur de 2.80 m et une section de 21 x 21 cm.

La base de la colonne sert de réservoir d'eau et d'éléments nutritifs dans un rapport (100/10/1) dont la solution est introduite dans la colonne par recirculation périodique sur le dessus du lit filtrant afin d'assurer l'humidité dans la colonne. Cette solution n'est jamais drainée et son niveau est maintenu constant par apport d'eau et de solution nutritive.

Dans les essais effectués, l'air était alimenté en bas de colonne à des débits pouvant varier de 80 à 220 litres par minute. Cet air était humidifié avant son entrée et était chargé de différents solvants organiques volatils (SOV). La concentration d'entrée en SOV était assurée par le réglage des débits.

Le biofiltre disposé dans la colonne est constitué partiellement ou en totalité (30 à 100%) de billes de tourbe préalablement mises en forme, initialement dopées puis ensemencées avec des souches bactériennes. Après acclimatation du substrat, 10 à 15 jours d'alimentation continue et progressive à 24 heures par jour, des mesures de performance sont entreprises à l'aide d'un analyseur d'hydrocarbures avec un étalon de méthane, à différentes hauteurs dans la colonne du biofiltre jusqu'à la sortie des gaz à l'extérieur.

De par la composition, ce biofiltre assure une uniformité de filtration et évite le compactage. Dans les essais effectués, il a permis d'opérer une colonne de 2.5 m de hauteur de billes de tourbe offrant une surface d'échange de 300 $m^2/m^3$ et pouvant résister, après 9 mois d'opération continue, au tassement et à l'augmentation de la perte de charge dans le biofiltre dus à la dureté des billes.

Ce biofiltre est régénérable par immersion de ce dernier dans la colonne et dans une phase aqueuse. L'injection d'air comprimé mélange le milieu filtrant (billes) qui se décolmate. Le filtre reprend sa place après drainage de l'eau et peut servir à nouveau. Cette opération de nettoyage n'affecte pratiquement pas l'état des billes tel que préparées.

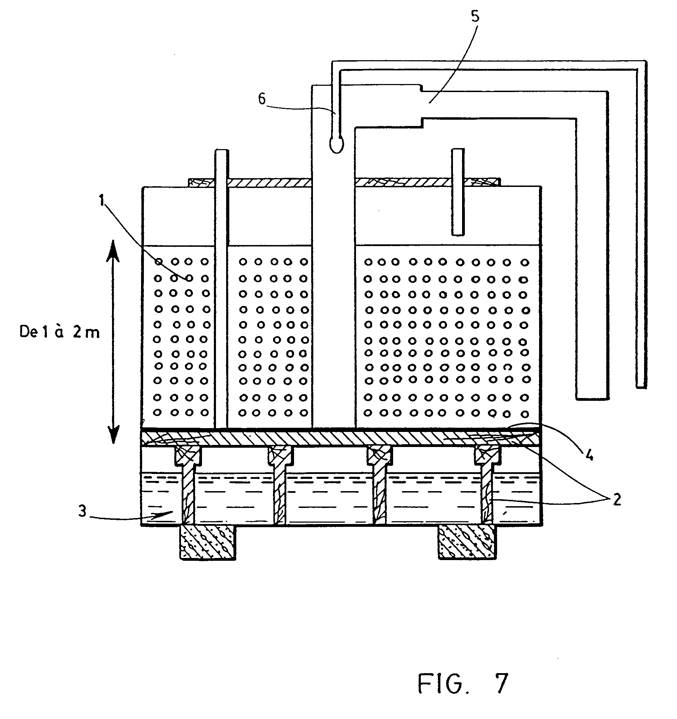

La fig. 7 est un schéma d'un exemple de biofiltre utilisable pour l'élimination des odeurs contenues dans l'air.

Dans les essais effectués, ce biofiltre contenait un lit (1) de bilfiltration de 1 à 2 m de hauteur, constitué partiellement ou en totalité de billes de tourbe et de copeaux préalablement mises en forme, initialement dopées puis ensemencées avec des souches bactériennes.

Le lit (1) repose sur un support (2) en bois avec treillis métallique, juste au dessus d'une réserve d'eau 3 servant à l'humidification du biofiltre. Dans les essais effectués, la hauteur de cette réserve d'eau (3) était de l'ordre de 30 cm.

Avantageusement, une membrane géotextile (4) peut être disposée entre le treillis métallique et la base du lit de billes, pour empêcher une perte de matériel dans l'eau.

L'air dont les odeurs sont à éliminer arrive par une conduite centrale (5), directement à la base du filtre.

Comme dans le cas du biofiltre utilisé, pour l' élimination de solvants organiques volatils, l'air à traiter est humidifié au moyen d'un gicleur (6) disposé dans la conduite d'amenée (5).

Le biofiltre est regénérable de la même façon que le biofiltre précédemment décrit en se référant à la fig. 6.

Dans l'un et l'autre cas, il est avantageux que les gaz traités soient humidifiés à un taux de 70 à 100% d'humidité relative. Il est également avantageux que les gaz humidifiés soient maintenus à une température comprise entre 10 et 45ºC, de façon à pouvoir obtenir le meilleur rendement possible des souches bactériennes utilisées pour l'incubation.

L'humidification des gaz peut s'effectuer avec de l'eau pure, ou avec une solution contenant des souches bactériennes.

Dans l'un et l'autre cas, il n'est pas nécessaire que l'ensemble du lit soit constitué de billes selon l'invention. En fait, jusqu'à 70% des billes peuvent être substituées par d'autres matériaux-supports tels que charbon activé, vermiculite, perlite, polymère plastique fermé ou poreux, caoutchouc poudreux, branches, écorces, argile expansée ou schiste gonflé. Lorsque de tels matériaux de substitution sont utilisés, il est toutefois avantageux que la taille de ceux-ci varie de 2 à 15 mm de diamètre, pour être du même ordre de taille que les billes de tourbe.

Le tableau 5 suivant donne le résultat de cette biofiltration effectuée avec des biofiltres tels que précédemment décrits.

TABLEAU 5

ESSAIS DE BIOFILTRATION

A) **SOLVANTS ORGANIQUES**

1) Conditions d'opération 4.2 m³/hre ou
100 m³ d'air/m³ de biofiltre/heure

Concentration 200 ppm en n-butanol

|  | Concentration n-buthanol en eq. méthane (ppm) | Concentration $CO_2$ (ppm) |
|---|---|---|
| Sortie | 15.31 | 710 |
| après 210 cm de filtre | 20.02 | 710 |
| après 160 cm de filtre | 44.76 | 665 |
| après 110 cm de filtre | 64.78 | 620 |
| après 60 cm de filtre | 123.68 | 520 |
| après 10 cm de filtre | 182.57 | 440 |
| Entrée | 200.82 | 440 |

2) Conditions d'opération 6 m³/heure,
143 m³ d'air/m³ de biofiltre/heure

Concentration 288 ppm en Isopropanol (IPA)

|  | Concentration en IPA (ppm) |
|---|---|
| Sortie | 18.30 |
| après 210 cm de filtre | 21.30 |
| après 160 cm de filtre | 61.20 |
| après 110 cm de filtre | 125.00 |
| après 60 cm de filtre | 190.00 |
| après 10 cm de filtre | 245.00 |
| Entrée | 288.00 |

EP 0 413 638 B1

B)  ODEURS AMMONIACALES

1)  Pour un débit de 540 m³/heure et une moyenne de 554 grammes d'ammoniac par jour à l'entrée du biofiltre, on obtient une efficacité moyenne d'enlèvement d'ammoniac de 86,1%.

Pour un débit de 710 m³/heure et une moyenne de 156 grammes d'ammoniac par jour, on obtient une efficacité de récupération d'ammoniac de 87,8%. Ces résultats ont été recueillis lors d'essais réalisés à l'usine de valorisation du lisier de porcs à St-Elzéar.

2)  Actuellement, des essais sont en cours concernant l'enlèvement des odeurs d'une usine d'épuration des eaux municipales à Magog; les résultats sont à venir. Par contre, de façon préliminaire, les résultats sont très satisfaisants.

**Revendications**

1.  Billes ou boulettes constituées d'un mélange d'un matériau organique fragmenté et d'un agent liant, caractérisées par le fait que l'agent liant est de la tourbe humifiée classée 3 ou 4 selon l'échelle de Von Post modifiée, et que la valeur du rapport de la masse de la tourbe humifiée anhydre à la masse dudit matériau organique fragmenté est entre 0,3 et 3,9.

2.  Billes ou boulettes selon la revendication 1, caractérisées par le fait que ledit matériau organique fragmenté est constitué de déchets organiques ayant une texture fibreuse ou granuleuse.

3.  Billes ou boulettes selon la revendication 1 ou 2, caractérisées par le fait que ledit matériau organique fragmenté est de la tourbe classée 1 ou 2 selon l'échelle de Von Post modifiée.

4.  Billes ou boulettes selon la revendication 3, caractérisées par le fait que la valeur du rapport de la masse de tourbe humifiée anhydre à la masse dudit matériau organique fragmenté est entre 0,7 et 3,9.

5.  Billes ou boulettes selon la revendication 1 ou 2, caractérisées par le fait que ledit matériau organique fragmenté est de la sciure de bois.

6.  Billes ou boulettes, selon la revendication 5, caractérisées par le fait que la valeur du rapport de la masse de la tourbe humifiée anhydre à la masse dudit matériau organique fragmenté est entre 0,3 et 0,5.

7.  Procédé de fabrication de billes ou boulettes telles que définies dans l'une quelconque des revendications précédentes, caractérisé en ce que:
    -  l'on se procure un matériau organique fragmenté dont l'humidité est inférieure à 70%;
    -  l'on se procure une tourbe humifiée ayant une humidité comprise entre 85 et 95%;
    -  l'on mélange le matériau organique et la tourbe humifiée dans des proportions telles que ledit mélange ait une humidité située entre 70 et 85% et que le rapport de la masse de la tourbe humifiée anhydre à la masse du matériau organique fragmenté anhydre se situe entre 0.3 et 3.9; et
    -  l'on agglomère ledit mélange en billes ou boulettes.

8.  Procédé selon la revendication 7, caractérisé en ce que le matériau organique fragmenté est de la tourbe de sphaigne, en ce que l'humidité du mélange se situe entre 75 et 85% et en ce que ledit rapport se situe entre 0,7 et 3,9.

9.  Procédé selon la revendication 7, caractérisé en ce que le matériau organique est de la sciure de bois en vrac ou comprimée et en ce que l'humidité du mélange se situe entre 70 et 85% et ledit rapport

16

entre 0,3 et 0,5.

**10.** Procédé selon la revendication 7, caractérisé en ce que l'on homogénéise la tourbe humifiée préalablement au mélange.

**11.** Procédé selon l'une quelconque des revendications 7 à 10, caractérisé en ce que l'on durcit les billes ou boulettes après l'agglomération par séchage jusqu'à en réduire l'humidité aux environs de 30%.

**12.** Procédé selon la revendication 7, caractérisé en ce que l'on traite en outre le mélange avec des agents contrôleurs de pH, afin de ramener le pH à une valeur de 6 à 8.

**13.** Procédé selon la revendication 7, caractérisé en ce que l'on fait en outre incuber ledit mélange avec des souches microbiennes.

**14.** Procédé selon la revendication 13, caractérisé en ce que l'on dope les billes ou boulettes avec des agents de nutrition utiles à la croissance microbienne.

**15.** Filtre constitué d'une milieu filtrant contenant des billes ou boulettes telles que définies dans l'une quelconque des revendications 1 à 6.

**16.** Utilisation d'un filtre tel que défini dans la revendication 15 dans un procédé d'épuration d'effluents gazeux, notamment dans le but d'éliminer les odeurs et/ou les solvants organiques volatils.

## Claims

**1.** Balls or pellets consisting of a mixture of a fragmented organic material and a binder, characterized in that the binder is humidified peat classed 3 or 4 on the modified Van Post scale, and in that the value of the ratio of the dry mass of humidified peat to the mass of the said fragmented organic material is between 0.3 and 3.9.

**2.** Balls or pellets according to Claim 1, characterized in that the said fragmented organic material consists of organic waste having a fibrous or granular texture.

**3.** Balls or pellets according to Claim 1 or 2, characterized in that the said fragmented organic material is peat classed 1 or 2 on the modified Von Post scale.

**4.** Balls or pellets according to Claim 3, characterized in that the value of the ratio of dry mass of humidified peat to the mass of the said fragmented organic material is between 0.7 and 3.9.

**5.** Balls or pellets according to Claim 1 or 2, characterized in that the said fragmented organic material is sawdust.

**6.** Balls or pellets according to Claim 5, characterized in that the value of the ratio of the dry mass of humidified peat to the mass of the said fragmented organic material is between 0.3 and 0.5.

**7.** Method of manufacture of balls or pellets as defined in any one of the preceding claims, characterized in that:
  - a fragmented organic material whose moisture content is less than 70 % is obtained;
  - humidified peat having a moisture content lying between 85 and 95 % is obtained;
  - the organic material and the humidified peat are mixed in proportions such that the said mixture has a moisture content lying between 70 and 85 % and that the ratio of the dry mass of humidified peat to the dry mass of fragmented organic material lies between 0.3 and 3.9; and
  - the said mixture is agglomerated into balls or pellets.

**8.** Method according to Claim 7, characterized in that the fragmented organic material is sphagnum peat and in that the moisture content of the mixture lies between 75 and 85 % and in that the said ratio lies between 0.7 and 3.9.

9. Method according to Claim 7, characterized in that the organic material is loose or compressed sawdust, and in that the moisture content of the mixture lies between 70 and 85 %, and the said ratio between 0.3 and 0.5.

10. Method according to Claim 7, characterized in that the humidified peat is homogenized prior to mixing.

11. Method according to any one of Claims 7 to 10, characterized in that the balls or pellets are hardened after agglomeration by drying until the moisture content is reduced to approximately 30 %.

12. Method according to Claim 7, characterized in that the mixture is furthermore treated with pH-controlling agents in order to bring the pH to a value of 6 to 8.

13. Method according to Claim 7, characterized in that the said mixture is furthermore incubated with microbial strains.

14. Method according to Claim 13, characterized in that the balls or pellets are doped with nutrients useful for microbial growth.

15. Filter consisting of a filtering medium containing balls or pellets as defined in any one of Claims 1 to 6.

16. Use of a filter as defined in Claim 15 in a gaseous effluent purification process, especially with the purpose of eliminating odours and/or volatile organic solvents.

**Patentansprüche**

1. Kleine runde Kugeln oder Briketts aus einem Gemisch eines zerkleinerten organischen Materials und einem Bindemittel, dadurch gekennzeichnet, daß das Bindemittel humifizierter Torf der Klasse 3 oder 4 nach der modifizierten Von Post-Skala ist, und das Verhältnis der Masse des wasserfreien humifizierten Torfs zur zerkleinerten organischen Masse zwischen 0,3 und 3,9 beträgt.

2. Kleine Kugeln oder Briketts nach Anspruch 1, dadurch gekennzeichnet, daß das zerkleinerte organische Material aus organischen Abfällen besteht, die eine fasrige oder granulierte Textur aufweisen.

3. Kleine Kugeln oder Briketts nach Anspruch 1 oder 2, dadurch gekennzeichnet, daß das zerkleinerte organische Material Torf der Klasse 1 oder 2 nach der modifizierten Von Post-Skala ist.

4. Kleine Kugeln oder Briketts nach Anspruch 3, dadurch gekennzeichnet, daß das Verhältnis der Masse des wasserfreien humifizierten Torfs zur Masse des zerkleinerten organischen Materials zwischen 0,7 und 3,9 beträgt.

5. Kleine Kugeln oder Briketts nach Anspruch 1 oder 2, dadurch gekennzeichnet, daß das zerkleinerte organische Material aus Holzspänen besteht.

6. Kleine Kugeln oder Briketts nach Anspruch 5, dadurch gekennzeichnet, daß das Verhältnis der Masse des wasserfreien humifizierten Torfs zur Masse des zerkleinerten organischen Materials zwischen 0,3 und 0,5 beträgt.

7. Verfahren zur Herstellung von kleinen Kugeln oder Briketts nach einem der vorangehenden Ansprüche, dadurch gekennzeichnet, daß man
   - sich ein zerkleinertes organisches Material beschafft, dessen Feuchtigkeit unterhalb 70 % beträgt,
   - sich humifizierten Torf beschafft, der eine Feuchtigkeit zwischen 85 und 95 % aufweist,
   - das organische Material und den humifizierten Torf so vermischt, daß das Gemisch eine Feuchtigkeit zwischen 70 und 85 % hat und das Verhältnis der Masse des wasserfreien humifizierten Torfs zur Masse des zerkleinerten, wasserfreien organischen Materials zwischen 0,3 und 3,9 liegt und
   - das Gemisch zu kleinen Kugeln oder Briketts verdichtet.

**8.** Verfahren nach Anspruch 7, dadurch gekennzeichnet, daß das zerkleinerte organische Material Torf aus Bleichmoosen (Sphagnen) ist, wobei die Feuchtigkeit des Gemisches zwischen 75 und 85 % und das Verhältnis zwischen beiden zwischen 0,7 und 3,9 beträgt.

**9.** Verfahren nach Anspruch 7, dadurch gekennzeichnet, daß das organische Material aus Holzspänen in loser Schüttung oder komprimierter Form besteht und daß die Feuchtigkeit des Gemisches zwischen 70 und 85 % und ihr Verhältnis zwischen 0,3 und 0,5 beträgt.

**10.** Verfahren nach Anspruch 7, dadurch gekennzeichnet, daß man den humifizierten Torf vor dem Vermischen homogenisiert.

**11.** Verfahren nach einem der Ansprüche 7 bis 10, dadurch gekennzeichnet, daß man die kleinen Kugeln oder Briketts nach ihrer Verdichtung durch Trocknen verfestigt, bis die Feuchtigkeit auf etwa 30 % vermindert ist.

**12.** Verfahren nach Anspruch 7, dadurch gekennzeichnet, daß man das Gemisch außerdem mit pH-Regler behandelt, um letzlich den pH auf Werte von 6 bis 8 zu reduzieren.

**13.** Verfahren nach Anspruch 7, dadurch gekennzeichnet, daß man das Gemisch außerdem mit Mikrobenstämmen inkubieren läßt.

**14.** Verfahren nach Anspruch 13, dadurch gekennzeichnet, daß man die kleinen Kugeln oder Briketts mit Nährstoffen für das Wachstum der Mikroben dotiert.

**15.** Filter bestehend aus einem Filtermedium enthaltend kleine Kugeln oder Briketts nach einem der Ansprüche 1 bis 6.

**16.** Verwendung eines Filters nach Anspruch 15 in einem Verfahren zur Reinigung von Gasströmen, im besonderen um Gerüche und/oder flüchtige organische Lösungsmittel zu eliminieren.

FIG. 1

FIG. 2

FIG. 3

FIG. 4

FIG. 5

SORTIE
DES GAZ

RECIRCULATION
DE LA
PRODUCTION
EAU+ELEMENTS
NUTRITIFS

93 LITRES
DE BILLES

1 à 5 m

air/1pa

FIG. 6

De 1 à 2 m

FIG. 7